# EUROPÄISCHE PATENTSCHRIFT

(11) **EP 1 525 787 B1**
(45) Veröffentlichungstag und Bekanntmachung des Hinweises auf die Patenterteilung: **17.03.2010**
(21) Anmeldenummer: 04023894.1
(22) Anmeldetag: 07.10.2004
(51) Int. Cl.: A01F 29/14, A01F 29/16

(54) **Verfahren und Vorrichtung zur Motordrehzahleinstellung an einer landwirtschaftlichen Arbeitsmaschine**
Method and device to control engine speed in an agricultural working machine
Méthode et dispositif pour la régulation de la vitesse d'un moteur dans une machine de travail agricole

(30) Priorität: 22.10.2003 DE 10349562
(43) Veröffentlichungstag der Anmeldung: 27.04.2005
(73) Patentinhaber: CLAAS Selbstfahrende Erntemaschinen GmbH, 33428 Harsewinkel (DE)
(72) Erfinder: Isfort, Heinrich, 48249 Dülmen (DE); Pollklas, Manfred, 33378 Rheda-Wiedenbrück (DE)

(56) Entgegenhaltungen:
- DE-A1- 4 129 113
- US-A- 5 070 682
- US-A- 5 901 535
- US-A1- 2001 037 638

## Beschreibung

Die Erfindung betrifft ein Verfahren und eine Vorrichtung zur Regelung der Drehzahlverhältnisse zwischen den Arbeitsaggregaten und dem Antriebsmotor einer landwirtschaftlichen Arbeitsmaschine, insbesondere den Vorpresswalzen und dem Antriebsmotor eines selbstfahrenden Feldhäckslers nach den Oberbegriffen der Ansprüche 1 und 10.

Landwirtschaftliche Maschinen unterliegen während der Erntefahrt erheblichen Belastungen. So werden sämtliche Arbeitsaggregate wie beispielsweise Schneidwerke, Vorpresswalzen oder die Häckseltrommel an einem selbstfahrenden Feldhäcksler durch das zu bearbeitende Erntegut stark beansprucht. Damit dennoch eine einwandfreie Bearbeitung des Ernteguts erfolgt, wird die Drehzahl des Antriebsmotors, der zumeist auch alle übrigen Arbeitsaggregate antreibt, während der Erntefahrt permanent auf einer Maximaldrehzahl gehalten. Hierdurch ist auch die Drehzahl der einzelnen Arbeitsaggregate sehr hoch, wodurch das Erntegut sehr schnell den Vorpresswalzen der Häckseltrommel zugeführt wird. Eine in dem vorderen Bereich der Vorpresswalzen eines selbstfahrenden Feldhäckslers integrierte Fremdkörperortungsvorrichtung hat nun die Aufgabe das Erntegut zu erfassen, um metallische Gegenstände zu sensieren und einen Schnellstopp der Vorpresswalzen auszulösen und somit den Gutfluss zum Stillstand zu bringen bevor der Fremdkörper nachgeordnete Arbeitsaggregate wie die Häckseltrommel erreicht und beschädigt. Bei sehr hohen, die Zuführgeschwindigkeit des Ernteguts steigernden, Drehzahlen muss daher beachtet werden, dass die Zuführgeschwindigkeit nicht die Schnellstopfunktion beeinträchtigt, indem der Fremdkörper vor dem Stillstand der Vorpresswalzen die Häckseltrommel erreicht.

Die DE 100 21 663 A1 offenbart einen selbstfahrenden Feldhäcksler mit einem einer Häckseleinrichtung vorgeordneten Einzugsgehäuse in dem drei hintereinander angeordnete Einzugswalzenpaare integriert sind. Dabei wird die jeweilig obere Walze der Einzugswalzenpaare über einen gemeinsamen Antrieb angetrieben. Den Einzugswalzen ist zur Erkennung von metallischen Gegenständen eine Fremdkörperortungsvorrichtung in Form eines Metalldetektors zugeordnet.
Damit die Erkennung von Fremdkörpern auch bei mit höheren Drehzahlen angetriebenen Einzugs- bzw. Vorpresswalzen rechtzeitig erfolgt, ist der allgemein bekannten Anordnung von zwei Einzugswalzenpaaren nacheinander lediglich zumindest ein weiteres Walzenpaar hinzugefügt worden. Durch das Hinzufügen von wenigstens einem weiteren Walzenpaar verlängert sich die Einzugsstrecke bis zum Häckselaggregat, so dass auch bei hohen Drehzahlen der Einzugswalzen hinreichend Zeit verbleibt die Einzugswalzen zu stoppen, bevor der Fremdkörper das Häckselaggregat erreicht

Nachteilig an der Anordnung von drei hintereinander angeordneter Einzugswalzenpaaren ist der erhöhte Bauraumbedarf für die zusätzlichen Walzenpaare. Die Erweiterung erfolgt nicht nur indem das weitere Walzenpaar den bereits vorhandenen Walzenpaaren hinzugefügt wird, vielmehr ist auch eine Vergrößerung des gesamten Einzugsgehäuses erforderlich.
Die Vergrößerung bzw. Verlängerung des Einzugsbereichs wirkt sich außerdem nachteilig auf die Stabilität der Verbindung zwischen Vorsatzgerät, Einzugsgehäuse und Feldhäcksler aus. Bei einer Erweiterung auf vier oder fünf Walzenpaaren wird zudem die Beweglichkeit des Feldhäckslers sowohl bei der Ernte- als auch der Straßenfahrt, insbesondere in kurvigen Bereichen, eingeschränkt.
Schließlich erhöhen sich die Kosten aufgrund jedes weiteren Walzenpaares nicht unerheblich, da das Walzenpaar aus besonders gehärtetem Material bestehen muss, welches zudem aufgrund des Detektierbereichs der Fremdkörperortungsvorrichtung aus antimagnetischem Material bestehen muss.

Im weiteren zeigt die US-A-5 901 535 eine Vorrichtung zur Motordrehzahleinstellung an einer landwirtschaftlichen Arbeitsmaschine, insbesondere einem selbstfahrenden Feldhäcksler, wobei die Ist-Drehzahlen der Einzugsorgane und der Häckseltrommel von Sensoren ermittelt, an eine Auswerteelektronik übermittelt, von dieser in ein Verhältnis gesetzt und in einer Weise ausgewertet werden, wobei die Auswerteelektronik die Ist-Drehzahlverhältnisse mit in der Auswerteelektronik hinterlegten Soli-Ddrehzahlverhältnisse vergleicht und bei einer Abweichung der Ist-Drehzahlverhältnisse von den Soll-Drehzahlverhältnissen eine Anpassung der Ist-Drehzahlverhältnisse an die Soll-Drehzahlverhältnisse vornimmt
Nachteilig an dieser Vorrichtung ist jedoch, dass die Motordrehzahlanpassung nicht in Abhängigkeit von der Sperrgeschwindigkeit einer Fremdkörperortungsvorrichtung vorgenommen wird.

Es ist daher Aufgabe der zugrundeliegenden Erfindung, ein Verfahren und eine Vorrichtung zur Durchführung des Verfahrens zu schaffen, die trotz hoher Drehzahlen der Vorpresswalzen einen rechtzeitigen Schnellstopp bei der Erkennung von Fremdkörpern im Einzugsbereich einer landwirtschaftlichen Arbeitsmaschine auslöst ohne baulich und konstruktiv aufwendige Maßnahmen durchführen zu müssen.

Diese Aufgabe wird erfindungsgemäß durch die kennzeichnenden Merkmale des Patentanspruchs 1 gelöst, wobei in den weiteren Patentansprüchen Merkmale aufgeführt sind, die diese Lösung in vorteilhafter Weise weiterentwickeln.

Indem die Istdrehzahl des wenigstens einen Arbeitsaggregates und die Istdrehzahl des Antriebsmotors an eine Auswerteelektronik übermittelt werden, die eine Anpassung der Istdrehzahl des wenigstens einen Arbeitsaggregates vornimmt, wobei die maximal zulässige Drehzahl des wenigsten einen Arbeitsaggregates in Abhängigkeit von der Sperrgeschwindigkeit der Fremdkörperortungsvorrichtung bestimmt wird, kann die Drehzahl des Arbeitsaggregates durch Senkung der Drehzahl des Antriebsmotors stets so reguliert werden, dass die durch die Drehzahl des Arbeitsaggregates bestimmte Zuführgeschwindigkeit des Erntegutes stets niedriger ist als die Sperrzeit die die Fremdkörperortungsvorrichtung benötigt, um den Stillstand der Arbeitsaggregate durchzuführen, so dass keine Schäden durch Fremdkörper an inner halb der in der landwirtschaftlichen Arbeitsmaschine angeordneten Organen verursacht werden.
Da lediglich eine Auswerteelektronik für die Abstimmung der Geschwindigkeiten notwendig ist, sind keine größeren baulichen Maßnahmen erforderlich. Außerdem kann jede beliebige Maschine mit geringem Aufwand mit der Auswerteelektronik nachgerüstet werden.

Dadurch, dass der Antriebsmotor in einem selbstfahrenden Feldhäcksler sowohl die Vorpresswalzen als auch die Häckseltrommel antreibt, ist es ausreichend, dass bei zu hoher Drehzahl der Vorpresswalzen lediglich die Istdrehzahl des Antriebsmotors abgesenkt wird, damit sich die Drehzahl der Vorpresswalzen verringert und damit auch die Zuführgeschwindigkeit des Emteguts.

Zur Entlastung des Fahrers, aber auch zum Schutz der Schnellstoppfunktion erfolgt die Drehzahländerung des Antriebsmotors bei zu hoher Drehzahl der Vorpresswalzen selbsttätig.

Zur Verbesserung der Häckselqualität kann die von der Drehzahl des Antriebsmotors abhängige Drehzahl des Arbeitsaggregates in Abhängigkeit von zumindest einem Erntegutparameter angesteuert werden.
Als Erntegutparameter können insbesondere die Erntegutschnittlänge, die Erntegutfeuchte, die Erntegutdichte oder die Erntegutart herangezogen werden.

Alternativ kann der Fahrer der landwirtschaftlichen Arbeitsmaschine die Parameter selbst einstellen. Auf diese Weise kann stets auf die aktuellen Erntebedingungen reagiert werden, ohne dass eine Minderung der Erntegutqualität zu befürchten ist.

Weitere vorteilhafte Ausgestaltungen sind Gegenstand weiterer Unteransprüche und werden nachfolgend anhand von Zeichnungen näher erläutert.

Es zeigt:
- Figur 1:: die schematische Darstellung eines selbstfahrenden Feldhäckslers in Seitenansicht
- Figur 2:: die schematische Darstellung des Antriebsstranges eines Feldhäckslers in Draufsicht

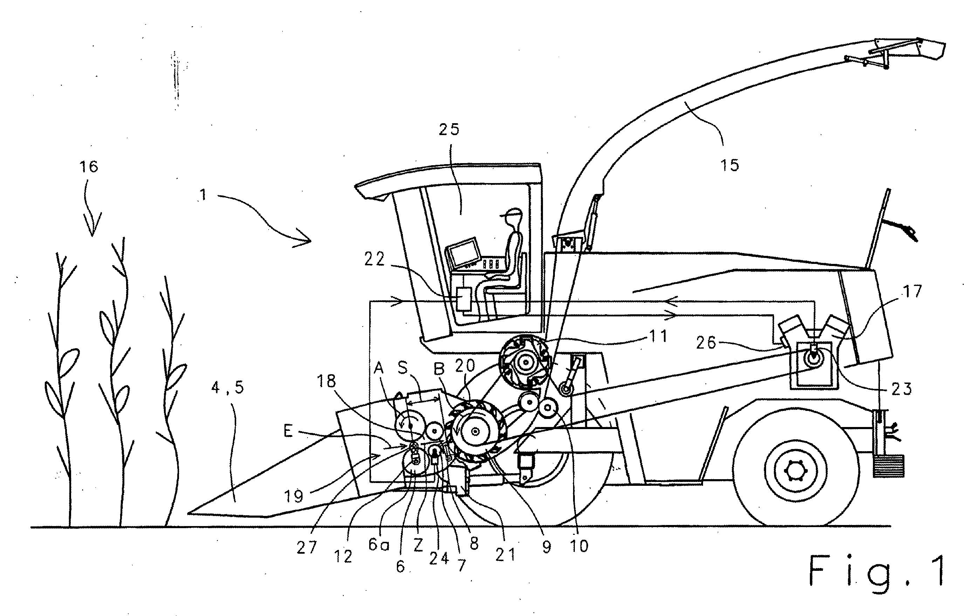

Figur 1 zeigt eine schematische Darstellung eines selbstfahrenden Feldhäckslers 1 in Seitenansicht als ein Anwendungsbeispiel des erfindungsgemäßen Verfahrens.
Das frontseitig am Feldhäcksler 1 montierte Vorsatzgerät 4, welches vorliegend als Maispflücker 5 ausgebildet ist, ist in Abhängigkeit von der jeweiligen Erntegutart 16 austauschbar und dient dazu das Erntegut 16 vom Feldboden aufzunehmen, zu schneiden und den nachgeordneten Arbeitsaggregaten zuzuführen.
Das mehrere Meter breite Vorsatzgerät 4 führt das aufgenommene Erntegut 16 in einen wesentlich schmaleren, der Breite des Förderkanals 18 entsprechenden Einzugsbereich 19 zusammen.
Über diesen Einzugsbereich 19 wird das Erntegut 16 von einem ersten Vorpresswalzenpaar 6 angenommen und verdichtet. Dem ersten Vorpresswalzenpaar 6 ist ein zweites Vorpresswalzenpaar 7 nachgeordnet, welches das vorverdichtete Erntegut 16 weiter zu einem Erntegutstrang verdichtet und den Erntegutstrang über eine Gegenschneide 8 den Messern 20 der Häckseltrommel 9 zuführt. An der unmittelbar vor der Häckseltrommel 9 angeordneten Gegenschneide 8 wird das Erntegut 16 von den Messern 20 zerschnitten und an ein der Häckseltrommel 9 nachgeordnetes Konditionierwalzenpaar 10 übergeben, bevor das Erntegut 16 von dem Nachbeschleuniger 11 beschleunigt und über einen sich anschließenden Auswurfkrümmer 15 aus dem Feldhäcksler 1 gefördert wird.

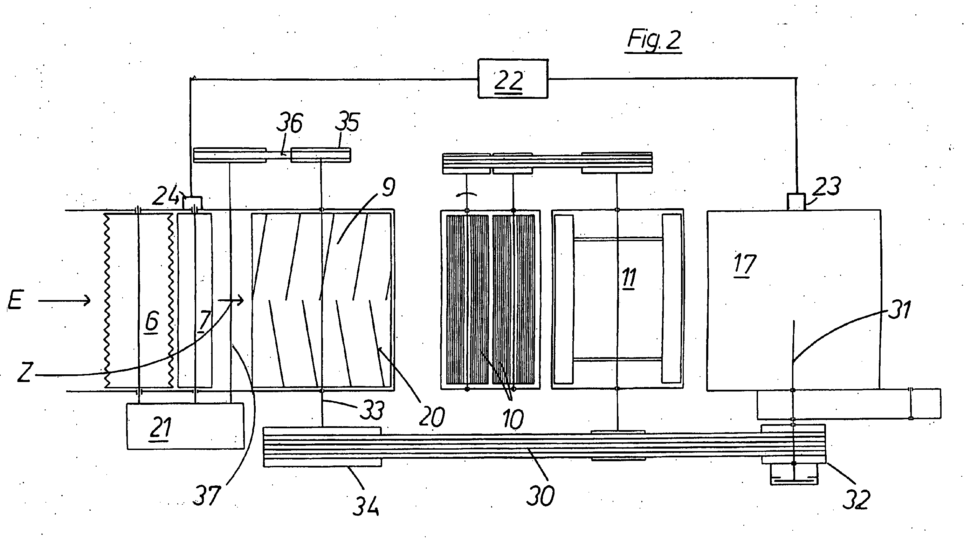

Wie sich aus der in Figur 2 schematisch abgebildeten Draufsicht eines Antriebsstranges eines Feldhäckslers 1 ergibt, werden sämtliche Arbeitsaggregate 11, 10, 9, 7, 6 von dem Antriebsmotor 17 des Feldhäckslers 1 angetrieben. Die Energieübertragung erfolgt über einen dem Antriebsmotor 17 zugeordneten Riementrieb. Der erforderliche Riemen 30 wird von einer am Antriebsmotor 17 angeordneten und auf einer Welle 31 befestigten treibenden Riemenscheibe 32 angetrieben. Dieser Riemen 30 steht unter anderem in direkter Wirkverbindung mit einer auf der Antriebswelle 33 der Häckseltrommel 9 angeordneten getriebenen Riemenscheibe 34. Auf diese Weise bestimmt die Drehzahl des Antriebsmotors 17 die Drehzahl der Häckseltrommel 9.
Ein weiterer auf einer zweiten Riemenscheibe 35 angeordneter Riemen 36 leitet die Energie über eine Antriebswelle 37 in ein Getriebe 21 welches die Vorpresswalzenpaare 6, 7 antreibt. Durch die Verstellung der Getriebeübersetzung kann außerdem die Drehzahl der Vorpresswalzen 6, 7 verändert werden.
Insgesamt werden so alle Arbeitsaggregate 6, 7, 9 gleichermaßen von dem Antriebsmotor 17 angesteuert, so dass sich eine Erhöhung oder Reduzierung der Drehzahl des Antriebsmotors 17 in dem gleichen Verhältnis auf die Arbeitsaggregate 6, 7, 9, 10, 11 auswirkt und insbesondere das Drehzahlverhältnis der Arbeitsaggregate 6, 7, 9 zueinander konstant bleibt.

Die Drehzahl A der Vorpresswalzenpaare 6, 7 und die davon abhängige Einzugsgeschwindigkeit E mit der das Erntegut 16 angenommen und die Zuführgeschwindigkeit Z mit der das Erntegut 16 an die Messer 20 der Häckseltrommel 9 herangeführt wird sind einzelne nicht abschließende Parameter mit denen die Häckselgutlänge bestimmt werden kann.
Die Einzugsgeschwindigkeit E des Ernteguts 16 ist abhängig von der Drehzahl A der Vorpresswalzenpaare 6, 7. Erhöht sich die Drehzahl A der Vorpresswalzenpaare 6, 7, so erhöht sich die Einzugsgeschwindigkeit E des Ernteguts 16 proportional hierzu.

Im gleichen Maße erhöht sich die Zuführgeschwindigkeit Z mit der sich das Erntegut 16 der Häckseltrommel 9 nähert.
Wird die Drehzahl A der Vorpresswalzenpaare 6, 7 durch Einlegung einer größeren Getriebeübersetzung erhöht und damit das Erntegut 16 schneller der Häckseltrommel 9 zugeführt, erhöht sich bei konstanter Häckseltrommeldrehzahl A die Häckselgutlänge des Ernteguts 16, da durch die schnellere Zuführung mehr Erntegut 16 an die schneidenden Messer 20 der Häckseltrommel 9 herangeführt wird.
Hingegen führt eine Verringerung der Drehzahl A durch Einlegung einer kleineren Getriebeübersetzung zu einer langsameren Gutzufuhr. Hierdurch wird das Erntegut 16 häufiger an der Gegenschneide 8 geschnitten, wodurch sich die Länge des geschnittenen Ernteguts 16 bei gleichbleibender Häckseltrommeldrehzahl B verringert.

Um ein Abwürgen des Antriebsmotors 17 aufgrund der starken Belastung der Arbeitsaggregate 4, 5, 6, 7, 9, 10, 11 zu vermeiden, wird der Antriebsmotor 17 während der Erntefahrt mit einer konstanten Drehzahl, die zuvor vom Fahrer der landwirtschaftlichen Maschine ausgewählt werden kann, betrieben. Hierbei hat es sich als vorzugswürdig erwiesen, den Antriebsmotor 17 mit der Maximaldrehzahl laufen zu lassen.
Aufgrund der hohen Drehzahl des Antriebsmotors 17 und der Energieübertragung auf die Vorpresswalzen 6, 7, deren Drehzahl bei der höchsten eingelegten Getriebeübersetzung die Maximaldrehzahl des Antriebsmotors 17 übersteigt, erfährt die Zuführgeschwindigkeit Z, mit der das Erntegut 16 an die Häckseltrommel 9 übergeben wird, eine ganz erhebliche Steigerung.
Hierbei wird das grundsätzlich bestehende Problem der rechtzeitigen Erkennung von Nichterntegutbestandteile gesteigert. Während der Erntefahrt können von dem Feldboden Gegenstände oder von dem Vorsatzgerät 4 abgerissene metallische Einzelteile aufgenommen werden.
Durch diese Fremdkörper können an den nachfolgenden Arbeitsaggregaten, insbesondere der Häckseltrommel 9, erhebliche Schäden eintreten. Die Reparatur gestaltet sich dabei kosten- und zeitintensiv, insbesondere kann die Erntefahrt nicht fortgesetzt werden.
Um solchen Beschädigungen vorzubeugen ist, wie in Figur 1 abgebildet, in die vordere untere Walze 6a des Vorpresswalzenpaares 6 eine Fremdkörperortungsvorrichtung 12 integriert. Diese Fremdkörperortungsvorrichtung 12 strahlt ein möglichst breites Detektierfeld 27 aus, welches den Erntegutstrom durchsetzt und den Erntegutstrom auf darin enthaltene Fremdkörper überwacht. Damit etwaige Fremdkörper möglichst frühzeitig erkannt werden, ist das Detektierfeld 27 vorzugsweise leicht nach vorn, in Richtung Vorsatzgerät 4, geneigt. Wird ein Fremdkörper von der Ortungsvorrichtung 12 erkannt, wird der Antrieb der Vorpresswalzen 6, 7 und der Antrieb des Vorsatzgerätes 4 unmittelbar gestoppt. Auf diese Weise wird vermieden, dass weiteres Erntegut 16 eingezogen und der sensierte Fremdkörper den Feldhäcksler 1 durchquert und Schäden verursacht.

Die Funktionsfähigkeit der Fremdkörperortungsvorrichtung 12 ist wesentlich von der Stoppzeit der Vorpresswalzenpaare 6, 7 abhängig, da der Einzug rechtzeitig stillstehen muss, bevor der Fremdkörper die Häckseltrommel 9 erreicht und deren Messer 20 zerstört. Daher muss sich die Stoppzeit bei hohen Vorpresswalzendrehzahlen verkürzen bzw. die Sperrgeschwindigkeit, mit der die Fremdkörpererkennungsvorrichtung 12 den Stillstand auslöst, erhöhen.
Wie zuvor erwähnt ist die Höhe der Einzugsgeschwindigkeit E abhängig von der Drehzahl A der Vorpresswalzen 6, 7. Durch eine hohe Drehzahl A erhöht sich auch die Zuführgeschwindigkeit Z mit der das Erntegut 16 an die Häckseltrommel 9 übergeben wird. Durch die Verstellung des Getriebes 21 kann zum Erreichen einer längeren Schnittlänge die höchste Getriebeübersetzung 21 eingelegt werden. Hierdurch erhöht sich die Drehzahl A der Vorpresswalzen 6, 7 im Verhältnis zu der Drehzahl des Antriebsmotors 17 und der Drehzahl B der Häckseltrommel 9. Aufgrund der hohen Drehzahlen von teilweise über von 2100 U/min wird das Erntegut 16 nun enorm schnell der Häckseltrommel 9 zugeführt.
Die von der Drehzahl A abhängige Zuführgeschwindigkeit Z und die vom Erntegut 16 zurückzulegende Strecke S, beginnend mit dem Anfangsbereich des Detektierfeldes vor dem ersten Vorpresswalzenpaar 6 bis zur Gegenschneide 8, sind dabei ausschlaggebend für die Sperrgeschwindigkeit mit der die Fremdkörperortungsvorrichtung 12 den Stillstand der Vorpresswalzen 6, 7 auslöst. Verkürzt sich die Strecke S oder erhöht sich die Drehzahl A muss sich auch die Sperrgeschwindigkeit erhöhen.

Durch das erfindungsgemäße Verfahren und die erfindungsgemäße Vorrichtung werden alle für die Sperrgeschwindigkeit relevanten Daten erfasst und in ein Verhältnis zu der maximal zulässigen Drehzahl der Vorpresswalzen 6, 7 gesetzt. Hieraus wird die maximal zulässige Drehzahl der Vorpresswalzen 6, 7 ermittelt, die für eine rechtzeitige Auslösung ihres Stillstands ausreicht.

Zum Erfassen und Verarbeiten aller notwendigen Daten steht eine Auswerteelektronik 22 zur Verfügung, die mit den Vorpresswalzen 6, 7 und dem Antriebsmotor 17 verbunden ist. Dieser Auswerteelektronik 22 werden über einen dem Antriebsmotor 17 zugeordneten Drehzahlsensor 23 und einem der unteren Vorpresswalze 7a zugeordneten Drehzahlsensor 24 die jeweiligen Istdrehzahlwerte übermittelt. Die maximal zulässige Drehzahl A der Vorpresswalzen 6, 7 ist unter Berücksichtigung der vom Erntegut zurückzulegenden Strecke S vorher in die Auswerteelektronik 22 als Sollwert einzugeben.
Die von den Drehzahlsensoren 23, 24 übermittelten Istdrehzahlwerte werden von der Auswerteelektronik 22 in ein Verhältnis zueinander gesetzt. Dieses Istdrehzahlverhältnis zwischen dem Antriebsmotors 17 und der Vorpresswalze 7a, welches dem Istdrehzahlverhältnis zwischen Häckseltrommel 9 und den Vorpresswalzen 6, 7 entspricht, wird mit einem in der Auswerteelektronik 22 eingegebenen Solldrehzahlverhältnis verglichen. Bei einer Abweichung des Istdrehzahlverhältnisses von dem Solldrehzahlverhältnisses generiert die Auswerteelektronik 22 bei mechanisch angetriebenem Vorpresswalzen 6, 7 ein Signal, aufgrund dessen die Antriebsmotordrehzahl automatisch gesenkt wird. Durch die Herabsetzung der Antriebsmotordrehzahl verringert sich die Drehzahl A der durch den Antriebsmotor 17 angetriebenen Vorpresswalzen 6, 7 und die Drehzahl B der Häckseltrommel 9, was zu einer Verringerung der Zuführgeschwindigkeit Z führt. Auf diese Weise kann ein etwaiger Schnellstop rechtzeitig erfolgen.
Es ist gleichfalls denkbar, dass die Drehzahlen der Vorpresswalzen 6, 7 und die Drehzahl des Antriebsmotor 17 in der Fahrerkabine 25 über eine elektrische Anzeige dem Fahrer angezeigt werden und dieser nach Belieben eine Regulierung der Istdrehzahlen vornehmen kann.

Alternativ zu der mechanischen Ansteuerung der Vorpresswalzen 6, 7 durch den Antriebsmotor 17 können die Vorpresswalzen 6, 7 auch hydrostatisch angetrieben werden. Der hydrostatische Antrieb der Vorpresswalzen 6, 7 hat den Vorteil, dass die Verstellung der Drehzahl A der Vorpresswalzen 6, 7 unabhängig von der Drehzahl des Antriebsmotors 17 und stufenlos vorgenommen werden kann.

Die Korrektur der Drehzahl A der Vorpresswalzen 6, 7 erfolgt ebenso, wie zuvor beschrieben, durch einen Vergleich des Istdrehzahlverhältnisses mit dem Solldrehzahlverhältnis innerhalb der Auswerteelektronik 22. Wird wiederum eine Erhöhung des Istdrehzahlverhältnisses der Vorpresswalzen 6, 7 gegenüber dem Solldrehzahlverhältnisses festgestellt, generiert die Auswerteelektronik 22 ein Stellsignal zur Regelung der Hydrostatik. Auf diese Weise wird in an sich bekannter und deshalb nicht näher beschriebener Weise die Differenz zwischen der Istdrehzahl und der Solldrehzahl der Vorpresswalzen 6, 7 und der Häckseltrommel 9 durch Absenkung der Istdrehzahl des Antriebsmotors 17 ausgeglichen.
Zur Vereinfachung der Feldarbeit können die unterschiedlichen Drehzahlen der Vorpresswalzen 6, 7 oder des Antriebsmotors 17 in Abhängigkeit von unterschiedlichen Erntegutparametern verändert werden. So ist denkbar, dass Parameter wie Erntegutschnittlänge, Erntegutfeuchte, Erntegutdichte oder Erntegutart als Bezugsgrößen für die Drehzahl der Vorpresswalzen 6, 7 oder des Antriebsmotors 17 zu Beginn der Erntefahrt vom Fahrer ausgewählt werden oder auch selbsttätig durch eine Elektronik eingestellt werden und hierdurch eine den aktuellen Erntebedingungen angepasste Bearbeitung des Ernteguts 16 vorgenommen wird.

Das erfindungsgemäße Verfahren und die erfindungsgemäße Vorrichtung gelangt nicht nur bei Feldhäckslern 1 oder bei Vorpresswalzen 6, 7 zur Anwendung, sondern ist auch an Arbeitsmaschinen jeglicher Art sowie allgemeinen Zuführeinrichtungen, wie beispielsweise Kettenförderern oder Bändern, einsetzbar.

### Bezugszeichenliste:

- 1: Selbstfahrender Feldhäcksler
- 4: Vorsatzgerät
- 5: Maispflücker
- 6: Vorpresswalzenpaar
- 6a: Untere Vorpresswalze
- 7: Vorpresswalzenpaar
- 7a: Untere Vorpresswalze
- 8: Gegenschneide
- 9: Häckseltrommel
- 10: Konditionierwalzenpaar
- 11: Nachbeschleuniger
- 12: Fremdkörperortungsvorrichtung
- 15: Auswurfkrümmer
- 16: Erntegut
- 17: Antriebsmotor
- 18: Förderkanal
- 19: Einzugsbereich
- 20: Messer
- 21: Getriebe
- 22: Auswerteelektronik
- 23: Drehzahlsensor
- 24: Drehzahlsensor
- 25: Fahrerkabine
- 26: Motorsteuergerät
- 27: Detektierfeld
- 30: Riemen
- 31: Welle
- 32: Riemenscheibe
- 33: Antriebswelle
- 34: Riemenscheibe
- 35: Riemenscheibe
- 36: Riemen
- 37: Antriebswelle

- E: Einzugsgeschwindigkeit
- Z: Zuführgeschwindigkeit
- A: Vorpresswalzendrehzahl
- B: Häckseltrommeldrehzahl
- S: Strecke

## Patentansprüche

1. Verfahren zur Motordrehzahleinstellung an einer landwirtschaftlichen Arbeitsmaschine, insbesondere einem selbstfahrenden Feldhäcksler (1), bestehend aus einem Antriebsmotor (17), welcher zumindest ein Arbeitsaggregat (6, 7, 9) antreibt und einer Fremdkörperortungseinrichtung (12) sowie einer Auswerteelektronik (22), wobei
die Istdrehzahl des wenigstens einen Arbeitsaggregates (5, 6) und die Istdrehzahl des Antriebsmotors (17) an eine Auswerteelektronik (22) übermittelt wer den, **dadurch gekennzeichnet, dass** die Auswerteelektronik (22) eine Anpassung der Istdrehzahl des Antriebsmotors (17) in Abhängigkeit von der Istdrehzahl des wenigstens einen Arbeitsaggregates (5, 6) vornimmt, wobei die maximal zulässige Drehzahl (A) des wenigstens einen Arbeitsaggregates (6, 7) in Abhängigkeit von der Sperrgeschwindigkeit der Fremdkörperortungsvorrichtung (12) bestimmt wird.

2. Verfahren zur Motordrehzahleinstellung nach Anspruch 1,
**dadurch gekennzeichnet, dass**
das wenigstens eine Arbeitsaggregat (6, 7) eine Vorpresswalze (6, 7) an einem selbstfahrenden Feldhäcksler (1) ist.

3. Verfahren zur Motordrehzahleinstellung nach einem oder mehreren der vorangegangenen Ansprüche,
**dadurch gekennzeichnet, dass**
die Sperrgeschwindigkeit der Fremdkörperortungsvorrichtung (12) durch die Einzugsgeschwindigkeit (E) des Erntegutes (16) bestimmt wird.

4. Verfahren zur Motordrehzahleinstellung nach einem oder mehreren der vorangegangenen Ansprüche,
**dadurch gekennzeichnet, dass**
die Istdrehzahl des Antriebsmotors (17) gesenkt wird.

5. Verfahren zur Motordrehzahleinstellung nach einem oder mehreren der vorangegangenen Ansprüche,
**dadurch gekennzeichnet, dass**
die Drehzahländerung des Antriebsmotors (17) selbsttätig erfolgt.

6. Verfahren zur Motordrehzahleinstellung nach einem oder mehreren der vorangegangenen Ansprüche,
**dadurch gekennzeichnet, dass**
das die Antriebsdrehzahl des Antriebsmotors (17) in Abhängigkeit von der Drehzahl des wenigsten einen Arbeitsaggregates (6, 7) verändert wird, wobei die Steuerung der Drehzahl des Antriebsmotors (17) in Abhängigkeit von zumindest einem Emtegutparameter erfolgt.

7. Verfahren zur Motordrehzahleinstellung nach Anspruch 6,
**dadurch gekennzeichnet, dass**
der wenigstens eine Emtegutparameter die Erntegutschnittlänge, Erntegutfeuchte, Emtegutdichte oder Emtegutart ist.

8. Verfahren zur Motordrehzahleinstellung nach einem oder mehreren der vorangegangenen Ansprüche,
**dadurch gekennzeichnet, dass**
wenigstens ein Emtegutparameter festgelegt werden kann.

9. Verfahren zur Motordrehzahleinstellung nach einem oder mehreren der vorangegangenen Ansprüche,
**dadurch gekennzeichnet, dass**
wenigstens ein Emtegutparameter selbsttätig festgelegt wird.

10. Vorrichtung zur Durchführung des Verfahrens zur Motordrehzahleinstellung an einer landwirtschaftlichen Arbeitsmaschine, insbesondere einem selbstfahrenden Feldhäcksler (1), bestehend aus einem Antriebsmotor (17), welcher zumindest ein Arbeitsaggregat (6, 7, 9) antreibt und einer Fremdkörperortungseinrichtung (12) sowie einer Auswerteelektronik (22), wobei
der Auswerteelektronik (22) ein oder mehrere Drehzahlensensoren (23, 24) zur Erfassung der Drehzahlverhältnisse zwischen dem Antriebsmotor (17) und wenigstens einem Arbeitsaggregat (6, 7) zugeordnet sind, wobei die Istdrehzahl des wenigstens einen Arbeitsaggregates (5, 6) und die Istdrehzahl des Antriebsmotors (17) an eine Auswerteelektronik (22) übermittelt werden, **dadurch gekennzeichnet, dass** die Auswerteelektronik (22) eine Anpassung der Istdrehzahl des Antriebsmotors (17) in Abhängigkeit von der Istdrehzahl des wenigstens einen Arbeitsaggregates (5, 6) vornimmt, wobei die maximal zulässige Drehzahl (A) des wenigstens einen Arbeitsaggregates (6, 7) in Abhängigkeit von der Sperrgeschwindigkeit der Fremdkörperortungsvorrichtung (12) bestimmt wird.

## Claims

1. A method of engine speed adjustment on an agricultural working machine, in particular a self-propelled forage harvester (1), comprising a drive engine (7) which drives at least one working assembly (6, 7, 9), and a foreign body detecting device (12) as well as an electronic evaluation means (22), wherein the actual speed of the at least one working assembly (5, 6) and the actual speed of the drive engine (17) are communicated to an electronic evaluation means (22), **characterised in that** the electronic evaluation means (22) effects adaptation of the actual speed of the drive engine (17) in dependence on the actual speed of the at least one working assembly (5, 6), wherein the maximum permissible speed (A) of the at least one working assembly (6, 7) is determined in dependence on the locking speed of the foreign body detecting device (12).

2. A method of engine speed adjustment according to claim 1 **characterised in that** the at least one working assembly (6, 7) is a pre-pressing roller (6, 7) on a self-propelled forage harvester (1).

3. A method of engine speed adjustment according to one or more of the preceding claims **characterised in that** the locking speed of the foreign body detecting device (12) is determined by the intake speed (E) of the crop material (16).

4. A method of engine speed adjustment according to one or more of the preceding claims **characterised in that** the actual speed of the drive engine (17) is lowered.

5. A method of engine speed adjustment according to one or more of the preceding claims **characterised in that** the change in speed of the drive engine (17) is effected automatically.

6. A method of engine speed adjustment according to one or more of the preceding claims **characterised in that** the drive speed of the drive engine (17) is altered in dependence on the rotary speed of the at least one working assembly (6, 7), wherein control of the speed of the drive engine (17) is effected in dependence on at least one crop material parameter.

7. A method of engine speed adjustment according to claim 5 **characterised in that** the at least one crop material parameter is the crop material cut length, crop material moisture content, crop material density or kind of crop material.

8. A method of engine speed adjustment according to one or more of the preceding claims **characterised in that** at least one crop material parameter can be fixed.

9. A method of engine speed adjustment according to one or more of the preceding claims **characterised in that** at least one crop material parameter can be automatically fixed.

10. Apparatus for carrying out the method of engine speed adjustment on an agricultural working machine, in particular a self-propelled forage harvester (1), comprising a drive engine (7) which drives at least one working assembly (6, 7, 9), and a foreign body detecting device (12) as well as an electronic evaluation means (22), wherein one or more rotary speed sensors (23, 24) are associated with the electronic evaluation means (22) for detecting the rotary speed ratio between the drive engine (17) and at least one working assembly (6, 7), wherein the actual speed of the at least one working assembly (5, 6) and the actual speed of the drive engine (17) are communicated to an electronic evaluation means (22), **characterised in that** the electronic evaluation means (22) effects adaptation of the actual speed of the drive engine (17) in dependence on the actual speed of the at least one working assembly (5, 6), wherein the maximum permissible speed (A) of the at least one working assembly (6, 7) is determined in dependence on the locking speed of the foreign body detecting device (12).

## Revendications

1. Procédé de réglage de la vitesse de rotation d'un moteur sur un engin agricole, en particulier d'une ensileuse automotrice (1), composée d'un moteur d'entraînement (17) qui entraîne au moins un organe de travail (6, 7, 9) et d'un dispositif de repérage de corps étrangers (12) ainsi que d'une électronique d'évaluation (22), la vitesse de rotation réelle dudit au moins un organe de travail (5, 6) et la vitesse de rotation réelle du moteur d'entraînement (17) étant transmises à une électronique d'évaluation (22), **caractérisé en ce que** l'électronique d'évaluation (22) adapte la vitesse de rotation réelle du moteur d'entraînement (17) en fonction de la vitesse de rotation réelle dudit au moins un organe de travail (5, 6), la vitesse de rotation maximale admissible (A) dudit au moins un organe de travail (6, 7) étant déterminée en fonction de la vitesse de blocage du dispositif de repérage de corps étrangers (12).

2. Procédé de réglage de la vitesse de rotation d'un moteur selon la revendication 1, **caractérisé en ce que** ledit au moins un organe de travail (6, 7) est un rouleau de précompression (6, 7) sur une ensileuse automotrice (1).

3. Procédé de réglage de la vitesse de rotation d'un moteur selon une ou plusieurs des revendications précédentes, **caractérisé en ce que** la vitesse de blocage du dispositif de repérage de corps étrangers (12) est déterminée par la vitesse d'introduction (E) du produit de récolte.

4. Procédé de réglage de la vitesse de rotation d'un moteur selon une ou plusieurs des revendications précédentes, **caractérisé en ce que** la vitesse de rotation réelle du moteur d'entraînement (17) est abaissée.

5. Procédé de réglage de la vitesse de rotation d'un moteur selon une ou plusieurs des revendications précédentes, **caractérisé en ce que** le changement de vitesse de rotation du moteur d'entraînement (17) a lieu automatiquement.

6. Procédé de réglage de la vitesse de rotation d'un moteur selon une ou plusieurs des revendications précédentes, **caractérisé en ce que** la vitesse de rotation d'entraînement du moteur d'entraînement (17) varie en fonction de la vitesse de rotation dudit au moins un organe de travail (6, 7), la commande de la vitesse de rotation du moteur d'entraînement (17) ayant lieu en fonction d'au moins un paramètre du produit de récolte.

7. Procédé de réglage de la vitesse de rotation d'un moteur selon la revendication 6, **caractérisé en ce que** ledit au moins un paramètre du produit de récolte est la longueur de coupe du produit de récolte, l'humidité du produit de récolte, la densité du produit de récolte ou la nature du produit de récolte.

8. Procédé de réglage de la vitesse de rotation d'un moteur selon une ou plusieurs des revendications précédentes, **caractérisé en ce qu'**au moins un paramètre du produit de récolte peut être défini.

9. Procédé de réglage de la vitesse de rotation d'un moteur selon une ou plusieurs des revendications précédentes, **caractérisé en ce qu'**au moins un paramètre du produit de récolte est défini automatiquement.

10. Dispositif de réglage de la vitesse de rotation d'un moteur sur un engin agricole, en particulier d'une ensileuse automotrice (1), composée d'un moteur d'entraînement (17) qui entraîne au moins un organe de travail (6, 7, 9) et d'un dispositif de repérage de corps étrangers (12) ainsi que d'une électronique d'évaluation (22), dans lequel un ou plusieurs capteurs de vitesse de rotation (23, 24) pour saisir les rapports des vitesses de rotation entre le moteur d'entraînement (17) et au moins un organe de travail (6, 7) sont associés à l'électronique d'évaluation (22), la vitesse de rotation réelle dudit au moins un organe de travail (5, 6) et la vitesse de rotation réelle du moteur d'entraînement (17) étant transmises à une électronique d'évaluation (22), **caractérisé en ce que** l'électronique d'évaluation (22) adapte la vitesse de rotation réelle du moteur d'entraînement (17) en fonction de la vitesse de rotation réelle dudit au moins un organe de travail (5, 6), la vitesse de rotation maximale admissible (A) dudit au moins un organe de travail (6, 7) étant déterminée en fonction de la vitesse de blocage du dispositif de repérage de corps étrangers (12).
